# EUROPÄISCHE PATENTSCHRIFT

(11) **EP 2 693 205 B1**
(45) Veröffentlichungstag und Bekanntmachung des Hinweises auf die Patenterteilung: **24.02.2016**
(21) Anmeldenummer: 13003768.2
(22) Anmeldetag: 29.07.2013
(51) Int. Cl.: G01N 25/72, G01N 25/18

(54) **Vorrichtung und Verfahren zur photothermischen Untersuchung einer Probe**
Method and device for photothermal investigation of a sample
Procédé et dispositif destinés à l'examen photothermique d'un échantillon

(30) Priorität: 31.07.2012 DE 102012106955
(43) Veröffentlichungstag der Anmeldung: 05.02.2014
(73) Patentinhaber: Netzsch Gerätebau GmbH, 95100 Selb (DE)
(72) Erfinder: Brunner, Martin, 95176 Konradsreuth (DE); Blumm, Jürgen, 95100 Selb (DE); Denner, Thomas, 95100 Selb (DE); Campbell, Robert, Duxbury, MA 02332 (US); Gebhardt, Michael, 95100 Selb (DE); Andreas, Hartinger, 95195 Röslau (DE); Hilpert, Thilo, 95100 Selb (DE); Lauterbach, Stefan, 95100 Selb (DE); Lindemann, André, 06217 Merseburg (DE); Schoedel, Matthias, 95126 Schwarzenbach (DE); Strobel, Andreas, 08209 Auerbach (DE); Tschoepel, Jürgen, 95659 Arzberg (DE)
(74) Vertreter: Roos, Peter

(56) Entgegenhaltungen:
- EP-A1- 0 535 881
- DE-A1- 19 908 410
- MIN ET AL: "A new laser flash system for measurement of the thermophysical properties", THERMOCHIMICA ACTA, ELSEVIER SCIENCE PUBLISHERS, AMSTERDAM, NL, Bd. 455, Nr. 1-2, 1. März 2007 (2007-03-01), Seiten 46-49, XP005908540, ISSN: 0040-6031, DOI: 10.1016/J.TCA.2006.11.026
- PRADERE C ET AL: "High speed heterodyne infrared thermography applied to thermal diffusivity identification", REVIEW OF SCIENTIFIC INSTRUMENTS, AIP, MELVILLE, NY, US, Bd. 82, Nr. 5, 10. Mai 2011 (2011-05-10), Seiten 54901-54901, XP012146443, ISSN: 0034-6748, DOI: 10.1063/1.3581335

## Beschreibung

Die vorliegende Erfindung betrifft eine Vorrichtung zur photothermischen Untersuchung mehrerer Proben nach dem Oberbegriff des Anspruchs 1 sowie ein Untersuchungsverfahren nach dem Oberbegriff des Anspruchs 8.

Eine derartige Vorrichtung und ein derartiges Verfahren sind beispielsweise aus dem Produktprospekt *"LFA 447 Nano Flash*®*"* der Fa. Netzsch-Gerätebau GmbH, Selb, Deutschland, bekannt (am 04.07.2012 im Internet abrufbar unter *http:llwww.netzsch-thermal-analysis.comldownloadlLFA_447_NanoFlash_D_1108_de_180.pdf*)*.* Die bekannte Vorrichtung umfasst:
- eine Xenonblitzlampe als Anregungsquelle zum Erzeugen eines auf eine als "Anregungsseite" fungierende Vorderseite der zu untersuchenden Probe gerichteten Anregungsstrahls,
- einen Infrarotdetektor zum Erfassen einer von einer "Erfassungsseite", hier Rückseite der Probe abgegebenen Wärmestrahlung, und
- eine Probenkammer in Form eines elektrisch betriebenen Ofens mit einem darin untergebrachten, als "Probenwechsler" ausgebildeten Probenhalter zur Anordnung und Temperierung mehrerer Proben.

Durch Einsatz des Ofens sind bei der bekannten Vorrichtung sehr vorteilhaft Messungen der Wärmeleitfähigkeit bzw. Temperaturleitfähigkeit der Probe zwischen Raumtemperatur und 300°C möglich.

Die Gestaltung des Probenhalters als Probenwechsler gestattet eine gleichzeitige Anordnung mehrerer Proben in der Probenkammer, von denen jeweils eine als aktuell zu vermessende Probe auswählbar ist. Dies besitzt den Vorteil, dass z. B. die eigentlich zu untersuchende Probe im Rahmen eines softwaregesteuerten Messprogramms, bei welchem z. B. die Temperatur in der Probenkammer schrittweise über einen vorbestimmten Temperaturbereich verändert wird, zusammen mit einer oder mehreren Referenzproben (mit bekannten physikalischen Eigenschaften) vermessen werden kann.

Zur Erzielung einer hohen Messgenauigkeit hat es sich als vorteilhaft herausgestellt, wenn der Infrarotdetektor bzw. dessen strahlungsempfindlicher Bereich möglichst nahe an der Rückseite der aktuell zu untersuchenden Probe angeordnet ist, um die von der Probenrückseite abgegebene Wärmestrahlung möglichst vollständig zu erfassen und möglichst keine aus der Beheizung des Ofens resultierende Wärmestrahlung zum Detektor gelangen zu lassen. Letztere "Störstrahlung" ist in der Praxis der Grund dafür, dass der Temperierungsbereich der bekannten Vorrichtung auf 300°C begrenzt ist. Eine noch höhere Temperatur der Probe bzw. des Innenraumes der Probenkammer hätte einen hinsichtlich der hohen Messgenauigkeitsanforderungen inakzeptablen Anstieg des Störstrahlungsanteils zur Folge.

Außerdem ist zu bedenken, dass eine Erhöhung der betriebsmäßig anfahrbaren maximalen Probentemperatur in der Regel eine vergrößerte Baulänge der Probenkammer erfordern würde, wodurch sich der Abstand zwischen Probe und Detektor ebenfalls vergrößern würde. Für einen vorgegebenen "Blickwinkel" des Detektors (innerhalb dessen der Detektor Wärmestrahlung erfasst) bedeutet dies, dass tendenziell mehr Störstrahlung aus der Probenkammer "an der Probe vorbei" zum Detektor gelangen könnte. Letzteres kann zwar durch Einsatz von geeignet dimensionierten und angeordneten Blenden vermieden werden. Im Hinblick auf unterschiedliche Probengrößen und -dicken ist die jeweils passende Dimensionierung bzw. Anordnung solcher Blenden in der Praxis jedoch nicht unproblematisch. Wenn eine solche Blendenanordnung z. B. manuell durch einen Benutzer anzupassen ist, so stellt dies einen gewissen Aufwand und auch eine Fehlerquelle dar.

Aus der Veröffentlichung PRADERE C ET AL: "High speed heterodyne infrared thermography applied to thermal diffusivity identification", REVIEW OF SCIENTIFIC INSTRUMENTS, AIP, MELVILLE, NY, US, Bd. 82, Nr. 5, 10. Mai 2011 (2011-05-10), Seiten 54901-54901, ist es zudem bekannt ein verstellbares Objektiv zwischen der Probe und dem Detektor anzubringen, um eine ortsaufgelöste photothermische Untersuchung zu ermöglichen.

Es ist eine Aufgabe der vorliegenden Erfindung, bei einer Vorrichtung bzw. einem Verfahren der eingangs genannten Art bei der photothermischen Untersuchung von Proben noch höhere Probentemperaturen bei gleichzeitig hoher Messgenauigkeit und Reproduzierbarkeit zu ermöglichen.

Gemäß der Erfindung wird diese Aufgabe durch eine Vorrichtung nach Anspruch 1 bzw. ein Verfahren nach Anspruch 8 gelöst. Die abhängigen Ansprüche sind auf vorteilhafte Weiterbildungen der Erfindung gerichtet.

Bei der erfindungsgemäßen Vorrichtung ist wesentlich, dass zwischen dem Probenhalter und dem Detektor eine verstellbare, wenigstens ein refraktives optisches Element und/oder ein reflektives optisches Element umfassende Erfassungsoptik vorgesehen ist, die zur Einstellung eines veränderbaren Sichtfeldes des Detektors auf der Probenoberfläche mittels der Steuereinrichtung automatisch verstellbar ist, und dass die Steuereinrichtung dazu ausgebildet ist, vorab durch den Benutzer eingebbare Abmessungsparameter der Proben bei der automatischen Verstellung des Sichtfeldes des Detektors im Rahmen des Messprogramms derart zu berücksichtigen, dass ein jeweils für die aktuell zu untersuchende Probe gewünschtes Sichtfeld eingestellt wird.

Der Begriff "Erfassungsoptik" soll hierbei jedes aus einem oder mehreren, refraktiven oder reflektiven, optischen Elementen gebildetes optisches Abbildungssystem bezeichnen, wobei die "Einstellung eines gewünschten Sichtfeldes" des Detektors bedeutet, dass durch eine Verstellung der Optik (z. B. durch Translation eines oder mehrerer optischer Elemente) diejenige Fläche auf der Probenoberfläche (im Bereich der Erfassungsseite) veränderbar ist, von welcher ausgehend Wärmestrahlung aufgrund der optischen Abbildung zum strahlungsempfindlichen Bereich des Detektors gelangt. Diese somit durch den Einstellungszustand der Erfassungsoptik definierte Fläche auf der Probenoberfläche ist das "Sichtfeld". Von außerhalb des eingestellten Sichtfeldes von der Erfassungsseite der Probe ausgehende Wärmestrahlung gelangt demgegenüber nicht zum Detektor und wird somit nicht erfasst.

Wenn bei der erfindungsgemäßen Vorrichtung als Sichtfeld des Detektors beispielsweise die im Wesentlichen gesamte Fläche der Erfassungsseite der Probe (z. B. eine der beiden Flachseiten einer plättchenförmigen Probe) eingestellt werden kann, so lässt sich damit vorteilhaft die Erfassung von Störstrahlung aus der Probenkammer stark unterdrücken und gleichzeitig ein großer Anteil der von der Erfassungsseite der Probe abgegebenen Wärmestrahlung zum Detektor leiten.

Die erfindungsgemäße Lösung schließt keineswegs aus, dass im Bereich zwischen der zu untersuchenden Probe und dem Detektor eine oder mehrere Blenden eingesetzt werden, um auf diese Weise ebenfalls eine Störstrahlungsdetektion zu vermeiden.

Eine für höhere Probentemperaturen zweckmäßigerweise größer dimensionierte Probenkammer und die damit einhergehende Vergrößerung des Abstandes zwischen Probe und Detektor kann im Rahmen der Erfindung insofern in Kauf genommen werden, als durch die Erfassungsoptik eine "Verengung des Blickwinkels" des Detektors erzielbar ist, durch welche aus der Probenkammerbeheizung resultierende Wärmestrahlung (Störstrahlung) an einer Ausbreitung bis hin zum Detektor gehindert wird.

Die Erfindung ermöglicht es somit, photothermische Untersuchungen insbesondere auch bei hohen Probentemperaturen mit hoher Messgenauigkeit und hoher Reproduzierbarkeit durchzuführen.

Ein weiterer Vorteil der Erfindung besteht darin, dass bei einer Einstellbarkeit eines Sichtfeldes, welches kleiner als die Gesamtfläche der Erfassungsseite der Probe ist, eine ortsaufgelöste Erfassung der von der Probe abgegebenen Wärmestrahlung realisiert werden kann.

Ein weiterer Vorteil ergibt sich speziell für den Fall, dass verschieden große und/oder verschieden dicke Proben untersucht werden sollen, sei es im Verlauf von separaten Messabläufen oder bei einer gemeinsamen Vermessung während ein und desselben Messablaufes (z. B. im Rahmen eines softwaregesteuerten Messprogramms, unter Einsatz eines "Probenwechslers"): Wenn beispielsweise verschieden dicke Proben untersucht werden, so kann dies mit einer Veränderung der optisch-geometrischen Verhältnisse von Probe zu Probe einhergehen, so dass sich damit auch die Größe des Sichtfeldes auf der Probenoberfläche, bei gleichbleibender optischer Abbildung, verändert. Dieser in der Praxis oftmals sehr unerwünschte Effekt kann jedoch durch die erfindungsgemäß vorgesehene Verstellbarkeit der Erfassungsoptik und somit des Sichtfeldes in einfacher Weise kompensiert werden.

Die Verstellung der Erfassungsoptik kann z. B. softwaregesteuert automatisch erfolgen. In diesem Zusammenhang ist anzumerken, dass Abmessungsparameter, wie z. B. die Größe und die Dicke einer Probe, in der Regel bekannt sind, so dass diese Parameter bei einer automatischen Verstellung in einem programmgesteuerten Messablauf (nach Eingabe solcher Parameter durch den Benutzer) berücksichtigt werden können, um ein jeweils für eine bestimmte Probe gewünschtes Sichtfeld einzustellen.

Bei einer Untersuchung mehrerer hinsichtlich ihrer Abmessungen verschiedener Proben kann somit insbesondere eine Einstellung des Sichtfeldes in jeweils gleicher Größe realisiert werden.

Im folgenden wird im Zusammenhang mit flächig ausgedehnten Proben diejenige Flachseite, auf welche der elektromagnetische Anregungsstrahl gerichtet ist, auch als "Vorderseite" (und die andere Flachseite dementsprechend als "Rückseite") bezeichnet. Diese Terminologie bzw. Definition ist jedoch rein willkürlich und dient lediglich zur anschaulicheren Bezeichnung der jeweiligen Flachseiten.

In einer Ausführungsform der Erfindung ist als die Anregungsseite eine erste Flachseite ("Vorderseite") einer flächig ausgedehnten, z. B. plättchenförmigen Probe und als die Erfassungsseite eine der ersten Flachseite abgewandte zweite Flachseite ("Rückseite") der Probe vorgesehen.

In diesem Fall wird vom Detektor eine von der Rückseite abgegebene Wärmestrahlung erfasst, welche durch die vom Anregungsstrahl auf der Vorderseite hervorgerufene Erwärmung (nach Ausbreitung eines oder mehrerer Wärmepulse bzw. Wärmewellen durch die Probe hindurch) bewirkt wurde.

In einer anderen Ausführungsform sind die Anregungsseite und die Erfassungsseite der Probe identisch, also von ein und derselben "Probenseite" gebildet. Bei einer flächig ausgedehnten, z. B. plättchenförmigen Probe bedeutet dies, dass sowohl die elektromagnetische Anregung als auch die Wärmestrahlungserfassung auf derselben Flachseite ("Vorderseite") erfolgen.

In diesem Fall wird vom Detektor eine von der Vorderseite abgegebene Wärmestrahlung erfasst, welche abhängig von der vom Anregungsstrahl ebenfalls auf der Vorderseite hervorgerufenen Erwärmung bewirkt wurde. In dieser Weise können insbesondere auch Proben untersucht werden, bei denen die vom Anregungsstrahl erzeugte Wärme sich nicht oder nur sehr langsam und/oder schwach durch die Probe hindurch ausbreitet.

Der Einsatz der Erfindung ist nicht auf bestimmte Arten von Proben beschränkt. Neben festen (z. B. metallischen) Proben können daher insbesondere z. B. auch flüssige, pulverförmige oder eine innere Struktur aufweisende (z. B. schichtartig aufgebaute) Proben untersucht werden. Für die Gestaltung jeweils geeigneter Probenaufnahmen des Probenhalters kann vorteilhaft auf aus dem Stand der Technik an sich bekannte Probenhalterkonstruktionen zurückgegriffen werden. Für nicht-feste Proben (z. B. flüssige oder pulverförmige Proben) sind die hier auf die Probenform bezogenen Begriffe wie Flachseite, Vorderseite, Rückseite, plättchenförmig etc. auf die in der Untersuchungssituation vorliegende Form der betreffenden Probe bezogen. In diesem Sinne können z. B. auch plättchenförmig-flüssige Proben untersucht werden.

Hinsichtlich der Lagerung solcher formveränderlicher Proben z. B. in einer etwa wannenförmigen Probenaufnahme kann vorgesehen sein, dass die elektromagnetische Anregung und/oder die Wärmestrahlungserfassung an einer an eine Wannenwandung der Probenaufnahme angrenzenden Probenseite erfolgt. Bei einer Anregung der Probe im Bereich einer solchen Wandung kann z. B. durch geeignete Wahl des Wannenmaterials sichergestellt werden, dass der Anregungsstrahl sich nennenswert durch das Wannenmaterial hindurch bis hin zur Probe ausbreitet. Alternativ oder zusätzlich kann jedoch auch eine nennenswerte Absorption des Anregungsstrahls im Wannenmaterial vorgesehen sein (dessen dadurch bewirkte Temperaturvariation dann über eine Wärmeleitung zu einer entsprechenden Temperaturvariation des Probenmaterials führt). Analoges gilt für die Wärmestrahlungserfassung. Eine direkte Erfassung der Wärmestrahlung einer an Wannenmaterial angrenzenden Probenseite erfordert eine entsprechende Durchlässigkeit des Wannenmaterials für die Wärmestrahlung. Alternativ oder zusätzlich kann die Wärmestrahlungserfassung jedoch auch teilweise indirekt erfolgen, indem durch Temperaturvariationen der betreffenden Probenseite hervorgerufene Temperaturvariationen bzw. Wärmestrahlungsanteile des Wannenmaterials vom Detektor erfasst werden.

Die verstellbare Erfassungsoptik kann ein oder mehrere refraktive optische Elemente, wie z. B. sphärische oder asphärische Linsen umfassen. Alternativ oder zusätzlich können auch reflektive optische Elemente (z. B. sphärische oder asphärische Spiegel) als Komponenten der Erfassungsoptik eingesetzt werden.

Jedes refraktive optische Element sollte aus einem Material gefertigt sein, welches eine möglichst hohe Transmission im Bereich des zu erwartenden Spektrums der zu erfassenden Wärmestrahlung besitzt. In dieser Hinsicht können solche Elemente z. B. aus einem Material auf Basis von Ge, ZnSe, ZnS, CaF₂ oder MgF₂ gefertigt sein.

Bei reflektiven optischen Elementen kann eine entsprechend hohe Reflektivität im relevanten Spektralbereich durch eine geeignete Oberflächenbeschichtung realisiert werden.

In einer Ausführungsform ist vorgesehen, dass jedes optische Element der verstellbaren Erfassungsoptik an wenigstens einer Stelle im Wellenlängenintervall von 2 µm bis 6 µm einen Transmissionskoeffizienten (bzw. Reflektionskoeffizienten) von mindestens 0,6, bevorzugt mindestens 0,8 besitzt.

In einer Ausführungsform ist die verstellbare Erfassungsoptik derart ausgebildet, dass im Sichtfeld des Detektors je nach Einstellung dieser Optik wahlweise die gesamte oder lediglich ein Teil der Erfassungsseite der zu untersuchenden Probe liegt.

Bevorzugt ist ein ansteuerbarer, insbesondere softwaregesteuert ansteuerbarer (z. B. elektromotorischer oder z. B. hydraulischer) Antrieb zur Verlagerung (wenigstens) eines optischen Elementes der Erfassungsoptik vorgesehen, um die Erfassungsoptik zur Einstellung des gewünschten Sichtfeldes zu verstellen.

Falls zwischen dem Probenhalter und dem Detektor eine oder mehrere Blenden zur Störstrahlungsunterdrückung vorgesehen sind, so soll im Rahmen der Erfindung nicht ausgeschlossen sein, dass die Verstellung der Erfassungsoptik zusätzlich zur Verlagerung wenigstens eines refraktiven oder reflektiven optischen Elementes auch eine Mitverlagerung wenigstens einer solchen Blende involviert.

In einer Ausführungsform ist als Antrieb beispielsweise ein Linearantrieb vorgesehen, mittels welchem eine Veränderung des Abstandes zwischen einem optischen Element der Erfassungsoptik und der Probe und/oder eine Veränderung des Abstandes zwischen einem optischen Element der Erfassungsoptik und dem Detektor möglich ist. Das betreffende optische Element kann hierfür z. B. in einer Linearführung verschieblich in Richtung einer optischen Elementachse gelagert sein, wobei der ansteuerbare Antrieb in geeigneter Weise mit dem optischen Element bzw. einer Elementhalterung gekoppelt ist.

Alternativ oder zusätzlich zu einer automatischen Verstellung durch Translation (wenigstens) eines optischen Elementes entlang seiner optischen Achse kann auch ein (z. B. softwaregesteuert ansteuerbarer) angetriebener Elementwechsel vorgesehen sein, bei welchem (wenigstens) ein optisches Element der Erfassungsoptik durch (wenigstens) ein anderes optisches Element ersetzt wird. Bei dieser Ausführungsform können gewissermaßen mehrere optische Elemente bzw. Erfassungsoptiken in der Vorrichtung vorgehalten und im laufenden Untersuchungsprozess je nach Bedarf getauscht werden. Eine konstruktiv besonders einfache Ausführungsform sieht hierzu einen so genannten Revolver vor. Bei einem solchen Revolver können mehrere optische Elemente mit parallelen optischen Achsen entlang eines Kreises bzw. Kreisbogens (in Umfangsrichtung zueinander beabstandet) angeordnet sein und durch eine entsprechende Drehung um eine Achse (Revolverachse), die parallel zu den optischen Achsen und durch den Kreismittelpunkt verläuft, jeweils bedarfsweise in den erfassungsseitigen Strahlengang der Vorrichtung gebracht werden. Alternativ oder zusätzlich zu einer Drehung des Revolvers zwecks Elementaustausch kann auch eine ansteuerbar angetriebene Translation des Revolvers in Richtung der Revolverachse zwecks Translation des im Strahlengang befindlichen Elements vorgesehen sein.

Falls die Verstellung der Erfassungsoptik die Möglichkeit eines Austausches eines optischen Elementes involviert, so können die vorgehaltenen optischen Elemente sich insbesondere in ihrer Brennweite voneinander unterscheiden. Alternativ oder zusätzlich kommt in Betracht, optische Elemente mit voneinander verschiedenen optischen Transmissionseigenschaften (bzw. bei reflektiven Elementen Reflektionseigenschaften) vorzuhalten, um beispielweise dem Umstand Rechnung zu tragen, dass die spektrale Zusammensetzung der zu erfassenden Wärmestrahlung in gewissem Maß von der jeweils aktuell zu untersuchenden Probe und der jeweiligen Probentemperatur abhängt.

Alternativ zu einem Revolver, bei welchem die Elementauswahl durch eine Drehung erfolgt, kann auch eine Mehrzahl von optischen Elementen mit zueinander parallelen, jedoch entlang einer geraden Strecke voneinander beabstandeten optischen Achsen vorgesehen sein, so dass eine Elementauswahl durch translatorische Verschiebung der Anordnung durchgeführt werden kann.

In einer Ausführungsform ist vorgesehen, dass die temperierbare Probenkammer derart ausgebildet ist, dass die Temperierung der Probe auf eine Probentemperatur von mehr als 300°C, insbesondere mehr als 400°C möglich ist.

Der Begriff "Probenkammer" bezeichnet einen zur Unterbringung des Probenhalters vorgesehenen und mit im Wesentlichen gleichmäßiger Temperatur temperierbaren Raumbereich der Vorrichtung. In einer Ausführungsform ist die Probenkammer im Wesentlichen vollständig geschlossen, d. h. von Probenkammerwandungen umgeben. Eine solche geschlossene Probenkammer kann z. B. einen Temperierungsmantel (enthaltend Heiz-und/oder Kühleinrichtungen) und stirnseitige Abschlusswandungen aufweisen. Falls die Anregung und/oder die Erfassung durch eine solche Stirnwandung hindurch vorgesehen ist, so kann die betreffende Wandung als "Strahlungsfenster", d. h. mit hinreichender optischer Transmission für die betreffende Strahlung ausgebildet sein.

Erfindungsgemäß ist vorgesehen, dass der Probenhalter zur gleichzeitigen Anordnung mehrerer Proben in der Probenkammer ausgebildet ist und Mittel zur Auswahl jeweils einer dieser Proben als eine aktuell zu untersuchende Probe vorgesehen sind.

Beispielsweise kann ein solcher "Mehrfach-Probenhalter" mit mehreren Probenaufnahmen vorgesehen sein, von denen sich durch eine entsprechende Betätigung des Probenhalters (z. B. durch eine Verdrehung und/oder eine Verschiebung desselben) jeweils eine der in den mehreren Probenaufnahmen aufgenommenen Proben als eine aktuell zu untersuchende Probe an eine Stelle platzieren lässt, an welcher der Anregungsstrahl auf die Probe auftrifft und das Sichtfeld des Detektors auf die Probe ausgerichtet ist.

In diesem Sinne kann also z. B. ein feststehender optischer Anregungs/Erfassungs-Pfad vorgesehen sein, der von der Anregungsquelle (z. B. Blitzlampe, Laser, etc.) über den Probenhalter zum Detektor verläuft, wobei die jeweils aktuell zu vermessende Probe in diesen feststehenden Pfad hinein verlagert wird, indem der Probenhalter bzw. die Probenkammer (mitsamt darin enthaltenen Probenhalter) hierzu geeignet bewegt wird. Hierzu kann z. B. wieder ein "Revolver" vorgesehen sein (wie oben bereits für die Erfassungsoptik beschrieben), um eine jeweils auszuwählende Probe in den Anregungs/Erfassungs-Pfad hineinzubewegen oder herauszubewegen. Alternativ zu einer Drehung kommt eine translatorische Bewegung eines Probenhalters in Betracht, welcher mehrere entlang einer Reihe angeordnete Probenaufnahmen besitzt.

In einer anderen Ausführungsform ist der Probenhalter ebenfalls als Mehrfach-Probenhalter ausgebildet, jedoch feststehend (stationär), wobei zur Auswahl einer der aufgenommenen Proben als eine aktuell zu untersuchende Probe eine entsprechende Bewegung der "Anregungs- und Erfassungsanordnung", d. h. der Anregungsquelle samt etwaig vorgesehener anregungsseitiger Optik und des Detektors samt Erfassungsoptik, relativ zu den (stationären) Proben vorgesehen ist. Bei dieser Ausführung wird gewissermaßen der optische Anregungs/Erfassungs-Pfad zur betreffenden Probe verlagert (und nicht umgekehrt).

Wie bereits erwähnt können die Anregungsseite und die Erfassungsseite der Probe von verschiedenen Seiten der Probe, also Vorderseite und Rückseite, gebildet sein. In diesem Fall verläuft der vorstehend erwähnte Anregungs/Erfassungs-Pfad von der Anregungsquelle zur Probenvorderseite und von der Probenrückseite weiter zum Detektor. Die Anregungsseite und die Erfassungsseite der Probe können jedoch auch von ein und derselben Probenseite bzw. der Probenvörderseite gebildet sein. In diesem Fall verläuft der genannte Anregungs/Erfassungs-Pfad von der Anregungsquelle zur Probenvorderseite und weiter von der Probenvorderseite zum Detektor. Hierbei kann gemäß einer Ausführungsvariante vorgesehen sein, dass der Anregungsstrahl die gesamte Probenvorderseite bestrahlt. Alternativ wird nur ein Teil bestrahlt ("Anregungsspot"). In analoger Weise bestehen für die Erfassung der Wärmestrahlung die zwei Möglichkeiten, diese Wärmestrahlung für die gesamte Probenvorderseite oder nur für einen Teil der Probenvorderseite ("Detektionsspot") zu erfassen. Falls ein Anregungsspot und ein Erfassungsspot vorgesehen sind, so sind diese gemäß einer Ausführungsform auf der Probenoberfläche voneinander beabstandet. Denkbar ist jedoch auch eine Ausgestaltung des Anregungs/Erfassungs-Pfades, bei welcher der Detektionsspot mit dem Anregungsspot überlappt oder identisch ist.

Gemäß der Erfindung wird die eingangs gestellte Aufgabe bei einem Verfahren der eingangs genannten Art dadurch gelöst, dass mittels einer zwischen dem Probenhalter und dem Detektor vorgesehenen, wenigstens ein refraktives optisches Element und/oder ein reflektives optisches Element umfassenden, verstellbaren Erfassungsoptik ein veränderbares Sichtfeld des Detektors auf der Probenoberfläche mittels der Steuereinrichtung automatisch eingestellt wird, wobei bei der automatischen Verstellung vorab durch einen Benutzer eingegebene Abmessungsparameter der Proben derart berücksichtigt werden, dass ein jeweils für die aktuell zu untersuchende Probe gewünschtes Sichtfeld eingestellt wird.

Die oben bereits für die erfindungsgemäße Vorrichtung beschriebenen Ausführungsformen und besonderen Gestaltungsdetails können, einzeln oder in beliebiger geeigneter Kombination, in analoger Weise auch für das erfindungsgemäße Verfahren vorgesehen sein.

So kann bei dem Verfahren beispielsweise vorgesehen sein, dass als Anregungsseite eine erste Flachseite (Vorderseite) einer flächig ausgedehnten Probe und als Erfassungsseite eine der ersten Flachseite abgewandte zweite Flachseite (Rückseite) der Probe vorgesehen ist.

Erfindungsgemäß ist vorgesehen, dass die Einstellung der Erfassungsoptik in Abhängigkeit von den Abmessungen (z. B. Größe und/oder Dicke) der zu untersuchenden Probe durchgeführt wird.

Dies ist beispielsweise dann von großem Vorteil, wenn bei einem softwaregesteuert ablaufenden Messprogramm gleichzeitig verschieden große und/oder verschieden dicke Proben untersucht werden und eine während des Ablaufes des Messprogramms durch die Software automatisierte Einstellung der Erfassungsoptik bewirkt wird. Damit ist es z. B. möglich, bei verschieden dicken Proben durch entsprechende Verstellung der Erfassungsoptik das Sichtfeld bzw. z. B. einen Sichtfeldradius für alle Proben konstant zu halten.

In einer Ausführungsform ist vorgesehen, dass bei einer Einstellung der Erfassungsoptik, bei welcher als Sichtfeld lediglich ein Teil der Erfassungsseite der zu untersuchenden Probe eingestellt ist, eine die Probe ortsaufgelöst abtastende photothermische Untersuchung der Probe durchgeführt wird.

Insbesondere kann hierbei detektionsseitig eine "Matrixvermessung" der Probe oder mehrerer am Probenhalter aufgenommener Proben erfolgen, wobei im Falle mehrerer (im Verlauf des Messprogramms gewechselter Proben) durch Konstanthaltung des Sichtfeldes vorteilhaft eine für die verschiedenen Proben einheitliche (detektionsseitige) Ortsauflösung der Messung realisiert werden kann. Alternativ ermöglicht die Erfindung vorteilhaft jedoch auch, dass für jede zu untersuchende Probe ein individuell durch den Benutzer oder eine Software zu Steuerung von Messabläufen vorgegebenes Sichtfeld eingestellt wird.

Mittels einer programmgesteuerten Steuereinrichtung können alle ansteuerbaren Vorrichtungskomponenten gemäß eines vorgegebenen Messprogramms angesteuert werden, wobei im Rahmen einer Softwaresteuerung auch vorab eingegebene Benutzereingaben (z. B. betreffend die Art und/oder Abmessungen der Probe(n)) berücksichtigt werden können. Des Weiteren können z. B. Parameter eingebbar sein, anhand derer die gewünschten Mess(proben)temperaturen festgelegt werden (z. B. mit einer maximalen Messtemperatur von mehr als 300°C, insbesondere mehr als 400°C). Schließlich können auch Parameter betreffend die Anregung eingebbar sein, etwa zur Festlegung einer Leistung bzw. einer zeitlichen Leistungsvariation der Anregungsquelle (z. B. bei einer gepulsten Lichtquelle: Pulsdauer, Pulsabstand und/oder Pulsenergie).

In einer Ausführungsform des Untersuchungsverfahrens ist vorgesehen, dass die temperierbare Probenkammer derart angesteuert wird, dass eine Temperierung der Probe auf eine Probentemperatur von mehr als 300°C, insbesondere mehr als 400°C, beispielsweise auf etwa 500°C erfolgt.

Die Erfindung wird nachfolgend anhand eines Ausführungsbeispiels mit Bezug auf die beigefügten Zeichnungen weiter beschrieben. Es stellen dar:
- Fig. 1: eine schematische Darstellung eines Ausführungsbeispiels einer Vorrichtung zur photothermischen Untersuchung von Proben,
- Fig. 2: eine vergrößerte Detaildarstellung von Fig. 1 zur Veranschaulichung einer Einstellung einer Erfassungsoptik, wobei für zwei verschiedene Einstellungen sich ergebende Strahlengänge der Wärmestrahlung eingezeichnet sind, und
- Fig. 3: eine Darstellung ähnlich der Fig. 2, jedoch mit Veranschaulichung der Beeinflussung eines "Blickwinkelbereiches" eines bei der Vorrichtung von Fig. 1 verwendeten Detektors je nach Einstellung der Erfassungsoptik.

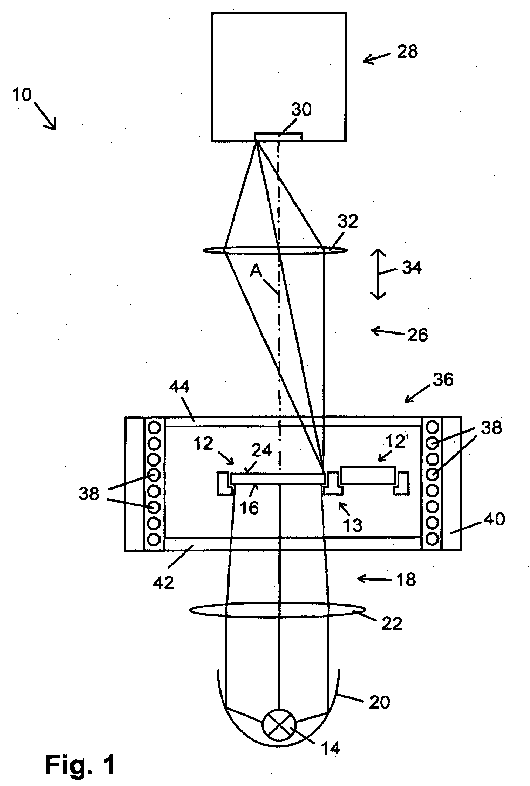

Fig. 1 zeigt ein Ausführungsbeispiel einer Vorrichtung 10 zur photothermischen Untersuchung von Proben 12, 12', die in hierfür vorgesehenen Probenaufnahmen eines Mehrfach-Probenhalters 13 der Vorrichtung 10 aufgenommen sind. Im in der Figur dargestellten Zustand wird die Probe 12 untersucht.

Die Vorrichtung 10 umfasst ferner eine gepulst betriebene Hochleistungs-Xenonblitzlampe 14 als eine Anregungsquelle zum Erzeugen eines auf eine Vorderseite 16 der Probe 12 gerichteten elektromagnetischen Anregungsstrahls 18. Die Energie der einzelnen Anregungspulse beträgt etwa 10 J und ist vom Benutzer an einer (nicht dargestellten) programmgesteuerten Steuereinrichtung einstellbar. Diese Steuereinrichtung steuert im Rahmen von wählbaren Messprogrammen den Betrieb sämtlicher ansteuerbarer Komponenten der Vorrichtung 10.

Im dargestellten Beispiel wird der gepulste Anregungsstrahl 18 mittels eines Reflektors 20 und einer Kollimations- bzw. Fokussierungslinse 22 auf die als "Anregungsseite" fungierende Probenvorderseite 16 gerichtet, wobei im dargestellten Beispiel die gesamte Fläche der Probenvorderseite 16 gleichmäßig bestrahlt wird (vgl. in Fig. 1 eingezeichnete Blitzlichtstrahlen). Abweichend davon könnte jedoch auch ein kleinerer Bereich der Probenvorderseite 16 bestrahlt werden.

In einer Weiterbildung der Erfindung ist die "Anregungsoptik", im dargestellten Ausführungsbeispiel also z. B. die Linse 22, verstellbar vorgesehen, so dass eine Einstellung des mit dem Anregungsstrahl zu bestrahlenden Bereiches auf der Anregungsseite der Probe vorgenommen werden kann. Analog zur Verstellung der Erfassungsoptik kann auch die anregungsseitige Verstellung gegebenenfalls im Rahmen eines Messprogrammablaufs (z. B. softwaregesteuert) bewirkt werden.

Die einzelnen "Heizpulse" (Anregungsstrahl 18) der Blitzlampe 14 bewirken eine zeitabhängige (hier: gepulste) Erwärmung der Probenvorderseite 16, so dass davon ausgehend eine Wärmepulsausbreitung durch das Material der Probe 12 hindurch resultiert.

In an sich bekannter Weise kann somit durch eine Erfassung der infolge dieser Heizpulse auf der Rückseite 24 der Probe 12 abgegebenen Wärmestrahlung 26 eine Untersuchung ("photothermische Untersuchung") von physikalischen Eigenschaften der Probe 12 realisiert werden. Damit messbare physikalische Größen sind insbesondere die Wärmeleitfähigkeit bzw. Temperaturleitfähigkeit des betreffenden (z. B. homogenen) Probenmaterials. Je nach konkreter Ausgestaltung der photothermischen Untersuchung kann diese Methode sogar Aufschluss über die innere Struktur der untersuchten Probe liefern.

Bei einer sehr einfachen Verfahrensvariante erfolgt sowohl die elektromagnetische Anregung, im dargestellten Beispiel an der Probenvorderseite, als auch die Wärmestrahlungserfassung, im dargestellten Beispiel an der Probenrückseite, ohne Ortsauflösung, d. h. über die gesamte Vorderseite bzw. Rückseite der betreffenden Probe verteilt bzw. kumuliert. Mit dieser Methode lässt sich z. B. die Wärmeleitfähigkeit oder die Temperaturleitfähigkeit von Proben aus homogenem Material sehr präzise ermitteln.

Im dargestellten Beispiel ist zur Erfassung der von der Probenrückseite 24 abgegebenen Wärmestrahlung 26 ein (bevorzugt gekühlter) Infrarotdetektor 28 mit einem strahlungsempfindlichen Detektorbereich 30 vorgesehen, wobei zwischen dem Probenhalter 13 und dem Detektor 28 bzw. dessen Detektorfläche 30 eine verstellbare Erfassungsoptik vorgesehen ist, die zur Einstellung eines gewünschten, bevorzugt kreisrunden "Sichtfeldes" des Detektors 28 auf der Probenrückseite 24 verstellbar ist.

Die verstellbare Erfassungsoptik kann wie dargestellt eine in Richtung einer optischen Achse A verlagerbare Linse 32 umfassen bzw. aus einer solchen Linse gebildet sein. Die Verlagerbarkeit der Linse 32 ist in Fig. 1 durch einen Pfeil 34 symbolisiert. Eine automatische Verlagerung der Linse 32 wird durch einen mit einer Linsenfassung gekoppelten und in Richtung der optischen Achse A wirkenden Linearantrieb realisiert (in Fig. 1 nicht dargestellt).

Mit der Verstellbarkeit der Erfassungsoptik, hier der Linse 32, wird eine "Zoomoptik" realisiert, mittels welcher festgelegt werden kann, aus welchem Bereich ausgehende Wärmestrahlung zum Detektorbereich 30 gelangt. In diesem Zusammenhang ist von Bedeutung, dass bei der Vorrichtung 10 der Probenhalter 13 in einer temperierbaren Probenkammer 36 untergebracht ist, um im Rahmen des Messprogramms eine gewünschte Temperierung der zu untersuchenden Proben 12, 12' durchzuführen, so dass prinzipiell die Gefahr besteht, dass unerwünschte "Störstrahlung" (durch eine Beheizung der Probenkammer 36 bedingt) ebenfalls zum Detektorbereich 30 gelangt.

Im dargestellten Beispiel umfasst ein Mantel der Probekammer 36 elektrisch betriebene Heizelemente 38 und optional eine in angesteuerter Weise von einem Kühlmittel durchströmbare Kühlpassage 40.

Stirnseitige Enden der Probenkammer 36 sind im dargestellten Beispiel von optischen Filtern 42 (anregungsseitig) und 44 (detektionsseitig) gebildet. Deren Filtercharakteristiken sind so vorgesehen, dass eine Transmission jeweils möglichst nur für den zu erwartenden Spektralbereich gegeben ist, also einerseits für das Spektrum des Anregungsstrahls 18 (Filter 42) und andererseits für das Spektrum der Wärmestrahlung 26 (Filter 44).

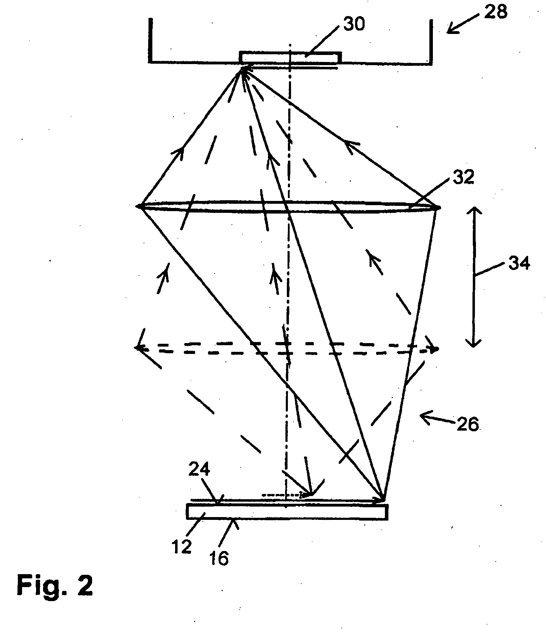

Fig. 2 veranschaulicht anhand einer vergrößerten Detaildarstellung die Funktionsweise der "Zoomoptik" (hier: verstellbare Linse 32).

Bei der in Fig. 2 mit durchgezogenen Linien dargestellten Einstellung der Linse 32 wird die (gesamte) Rückseite 24 der Probe 12 (vgl. durchgezogenen "Gegenstandspfeil") auf die Fläche des strahlungsempfindlichen Detektorbereiches 30 abgebildet. Bei dieser Einstellung wird somit die gesamte von der Probenrückseite 24 ausgehende Wärmestrahlung vom Detektor 28 erfasst. Etwaig "an der Probe vorbei" gehende Wärmestrahlung aus der Probenkammer wird durch dieses optische System vorteilhaft nicht auf den Detektorbereich 30 abgebildet. Eine Erfassung solcher "Störstrahlung" ist somit vorteilhaft unterdrückt.

Nach einer Verstellung der Linse 32 in die durch gestrichelte Linien dargestellte Position wird nurmehr ein Teil der Probenrückseite 24 (vgl. gestrichelten kleineren "Gegenstandspfeil") auf die Fläche des strahlungsempfindlichen Detektorbereiches 30 abgebildet. Diese Einstellung kann z. B. vorteilhaft auch dazu genutzt werden, eine detektionsseitig ortsaufgelöst abtastende Untersuchung der Probe 12 durchzuführen. An der Probe 12 vorbeigehende Störstrahlung wird vorteilhaft auch bei dieser Einstellung unterdrückt.

Eine ortsaufgelöste abtastende photothermische Untersuchung der Probe 12 kann in dieser Situation beispielsweise dergestalt durchgeführt werden, dass die Position der Probe 12 schrittweise in Querrichtung(en), d. h. orthogonal zur optischen Achse A, verlagert wird, um damit die von verschiedenen Stellen der Probenrückseite 24 ausgehende Wärmestrahlung separat zu vermessen. Insbesondere bei einer derartigen Messmethode kann auch anregungsseitig eine Fokussierung des Anregungsstrahls 18 auf einen kleinen Teil ("Spot") der Probenvorderseite 16 von Vorteil sein.

Wenngleich dies in der Figur nicht dargestellt ist, so kann der Detektor 28 im Bereich vor dessen strahlungsempfindlichen Bereich 30 vorteilhaft eine feststehende Blende aufweisen, mittels welcher ein Winkelbereich (z. B. "Blickwinkelkegel") des Detektors 28 definiert wird, innerhalb dessen Strahlung zum strahlungsempfindlichen Bereich 30 gelangen kann. Die Wirkung einer solchen Detektorblende in Verbindung mjt der übrigen Erfassungsoptik sollte so vorgesehen sein, dass damit die gewünschte Verstellwirkung der Erfassungsoptik nicht beeinträchtigt wird.

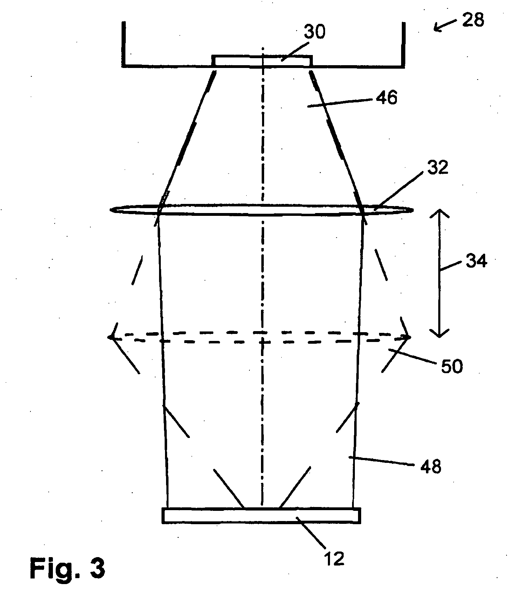

Fig. 3 veranschaulicht nochmals die Funktionsweise der "Zoomoptik" in einer anderen Betrachtungsweise. Dargestellt ist hier ein "Blickwinkelbereich" 46 des Detektors 28, der je nach Position der Linse 32 auf einen unterschiedlich stark "verengten Blickwinkelbereich" 48 bzw. 50 im Bereich der Probe 12 transformiert wird.

Zusammenfassend wird bei der Vorrichtung 10 detektorseitig eine verstellbare Erfassungsoptik (Zoomoptik) verwendet, so dass das auf der aktuell zu untersuchenden Probe sich ergebende Sichtfeld des Detektors vorteilhaft variiert werden kann. Damit kann z. B. mittels Elektronik bzw. Software insbesondere auf unterschiedliche Probengrößen und - dicken reagiert werden. Wenn im Messablauf beispielsweise ein Wechsel von der dargestellten Probe 12 auf die (dickere) Probe 12' erfolgt (automatisiert), so würde sich bei unveränderter Erfassungsoptik ein etwas kleineres Sichtfeld auf der Probe 12' (als auf der Probe 12) ergeben. Dieser Effekt kann jedoch vorteilhaft gewünschtenfalls durch eine geeignete automatisierte Verstellung der Erfassungsoptik kompensiert werden. Wenn in dieser Weise z. B. konstant gehaltene Sichtfeldgrößen für verschiedene Proben vorgesehen werden, so können besser vergleichbare Messergebnisse für die verschiedenen Proben erhalten werden.

## Patentansprüche

1. Vorrichtung (10) zur photothermischen Untersuchung mehrerer Proben (12,12'), mit
einer temperierbaren Probenkammer (36) mit einem darin untergebrachten Mehrfach-Probenhalter (13) zur gleichzeitigen Anordnung mehrerer Proben (12, 12') in der Probenkammer (36), wobei Mittel zur Auswahl jeweils einer der mehreren Proben (12, 12') als eine aktuell zu untersuchende Probe (12) vorgesehen sind,
einer Anregungsquelle (14, 20, 22) zum Erzeugen eines auf eine Anregungsseite der aktuell zu untersuchenden Probe (12) gerichteten elektromagnetischen Anregungsstrahls (18),
einem Detektor (28) zum Erfassen einer von einer Erfassungsseite der aktuell zu untersuchenden Probe (12) abgegebenen Wärmestrahlung (26), und
einer programmgesteuerten Steuereinrichtung zur Auswahl der aktuell zu untersuchenden Probe (12) und zur Durchführung einer gewünschten Temperierung der aktuell zu untersuchenden Probe (12) im Rahmen eines Messprogramms zur Untersuchung der mehreren Proben (12, 12'),
**dadurch gekennzeichnet, dass** zwischen dem Probenhalter (13) und dem Detektor (28) eine verstellbare, wenigstens ein refraktives optisches Element (32) und/oder ein reflektives optisches Element umfassende Erfassungsoptik vorgesehen ist, die zur Einstellung eines veränderbaren Sichtfeldes des Detektors (28) auf der Probenoberfläche mittels der Steuereinrichtung automatisch verstellbar ist, wobei die Steuereinrichtung dazu ausgebildet ist, vorab durch den Benutzer eingebbare Abmessungsparameter der Proben (12, 12') bei der automatischen Verstellung des Sichtfeldes des Detektors (28) im Rahmen des Messprogramms derart zu berücksichtigen, dass ein jeweils für die aktuell zu untersuchende Probe (12) gewünschtes Sichtfeld eingestellt wird.

2. Vorrichtung (10) nach Anspruch 1, wobei als Anregungsseite eine erste Flachseite (16) einer flächig ausgedehnten Probe (12) und als Erfassungsseite eine der ersten Flachseite abgewandte zweite Flachseite (24) der Probe (12) vorgesehen ist.

3. Vorrichtung (10) nach Anspruch 1 oder 2, wobei die Erfassungsoptik wenigstens ein refraktives optisches Element (32) umfasst.

4. Vorrichtung (10) nach einem der vorangehenden Ansprüche, wobei die verstellbare Erfassungsoptik derart ausgebildet ist, dass damit ein Ersatz wenigstens eines optischen Elementes (32) der Erfassungsoptik durch wenigstens ein anderes optisches Element ermöglicht ist.

5. Vorrichtung (10) nach einem der vorangehenden Ansprüche, wobei ein Linearantrieb vorgesehen ist, mittels welchem eine Veränderung des Abstandes zwischen einem optischen Element (32) der Erfassungsoptik und der Probe (12) und/oder eine Veränderung des Abstandes zwischen einem optischen Element (32) der Erfassungsoptik und dem Detektor (28) möglich ist.

6. Vorrichtung (10) nach einem der vorangehenden Ansprüche, wobei die temperierbare Probenkammer (36) derart ausgebildet ist, dass die Temperierung der Proben (12, 12') auf eine Probentemperatur von mehr als 300°C, insbesondere mehr als 400°C möglich ist.

7. Vorrichtung (10) nach einem der vorangehenden Ansprüche, wobei die Steuereinrichtung dazu ausgebildet ist, für die mehreren Proben (12, 12') eine Einstellung des Sichtfeldes in jeweils gleicher Größe zu realisieren.

8. Verfahren zur photothermischen Untersuchung mehrerer Proben (12, 12'), bei dem
mittels eines in einer temperierbaren Probenkammer (36) angeordneten Mehrfach-Probenhalters (13) gleichzeitig mehrere Proben (12, 12') in der Probenkammer (36) angeordnet werden, von denen jeweils eine als eine aktuell zu untersuchende Probe (12) ausgewählt wird,
ein elektromagnetischer Anregungsstrahl (18) auf eine Anregungsseite der aktuell zu untersuchenden Probe (12) gerichtet wird,
eine von einer Erfassungsseite der aktuell zu untersuchenden Probe (12) abgegebene Wärmestrahlung (26) mittels eines Detektors (28) erfasst wird,
wobei mittels einer programmgesteuerten Steuereinrichtung die aktuell zu untersuchende Probe (12) ausgewählt und eine gewünschte Temperierung dieser Probe (12) im Rahmen eines Messprogramms zur Untersuchung der mehreren Proben (12, 12') durchgeführt wird,
**dadurch gekennzeichnet, dass** mittels einer zwischen dem Probenhalter (13) und dem Detektor (28) vorgesehenen, wenigstens ein refraktives optisches Element (32) und/oder ein reflektives optisches Element umfassenden, verstellbaren Erfassungsoptik ein veränderbares Sichtfeld des Detektors (28) auf der Probenoberfläche mittels der Steuereinrichtung automatisch eingestellt wird, wobei bei der automatischen Verstellung vorab durch einen Benutzer eingegebene Abmessungsparameter der Proben (12, 12') derart berücksichtigt werden, dass ein jeweils für die aktuell zu untersuchende Probe (12) gewünschtes Sichtfeld eingestellt wird.

9. Verfahren nach Anspruch 8, wobei die Einstellung der Erfassungsoptik in Abhängigkeit von einer Größe und/oder Dicke der aktuell zu untersuchenden Probe (12) durchgeführt wird.

10. Verfahren nach Anspruch 8 oder 9, wobei bei, der automatischen Verstellung für die mehreren Proben (12, 12') eine Einstellung des Sichtfeldes in jeweils gleicher Größe realisiert wird.

## Claims

1. A device (10) for the photothermal analysis of multiple samples (12, 12'), with
a temperature-controlled sample chamber (36), in which a multiple sample holder (13) is accommodated in order to simultaneously arrange multiple samples (12, 12') in the sample chamber (36), wherein means for respectively selecting one of the multiple samples (12, 12') as a sample (12) to be currently analyzed are provided,
an excitation source (14, 20, 22) for generating an electromagnetic excitation beam (18) that is directed at an excitation side of the sample (12) to be currently analyzed,
a detector (28) for detecting thermal radiation (26) emitted from a detection side of the sample (12) to be currently analyzed, and
a program-controlled control device for selecting the sample (12) to be currently analyzed and for carrying out a desired tempering of the sample (12) to be currently analyzed as part of a measuring program for analyzing the multiple samples (12, 12'),
**characterized in that** an adjustable optical detection system comprising at least one refractive optical element (32) and/or one reflective optical element is provided between the sample holder (13) and the detector (28) and can be automatically adjusted by means of the control device in order to adjust a variable field of vision of the detector (28) on the sample surface, wherein the control device is designed for taking into consideration dimensional parameters of the samples (12, 12'), which can be input by a user beforehand, in the automatic adjustment of the field of vision of the detector (28) as part of the measuring program in such a way that a desired field of vision for the sample (12) to be currently analyzed is respectively adjusted.

2. The device (10) according to claim 1, wherein a first flat side (16) of a flatly extending sample (12) is used as excitation side and a second flat side (24) of the sample (12), which faces away from the first flat side, is used as detection side.

3. The device (10) according to claim 1 or 2, wherein the optical detection system comprises at least one refractive optical element (32).

4. The device (10) according to one of the preceding claims, wherein the optical detection system is realized in such a way that at least one optical element (32) of the optical detection system can be replaced with at least one other optical element.

5. The device (10) according to one of the preceding claims, wherein a linear drive is provided in order to vary the distance between an optical element (32) of the optical detection system and the sample (12) and/or to vary the distance between an optical element (32) of the optical detection system and the detector (28).

6. The device (10) according to one of the preceding claims, wherein the temperature-controlled sample chamber (36) is realized in such a way that the samples (12, 12') can be tempered to a sample temperature in excess of 300 °C, particularly in excess of 400 °C.

7. The device (10) according to one of the preceding claims, wherein the control device is designed for respectively realizing an adjustment of the field of vision in the same size for the multiple samples (12, 12').

8. A method for the photothermal analysis of multiple samples (12, 12'), in which
multiple samples (12, 12') are simultaneously arranged in a temperature-controlled sample chamber (36) by means of a multiple sample holder (13) accommodated in the sample chamber (36), wherein one of these multiple samples is respectively selected as a sample (12) to be currently analyzed,
an electromagnetic excitation beam (18) is directed at an excitation side of the sample (12) to be currently analyzed, and
thermal radiation (26) emitted from a detection side of the sample (12) to be currently analyzed is detected by means of a detector (28),
wherein a program-controlled control device selects the sample (12) to be currently analyzed and carries out a desired tempering of this sample (12) as part of a measuring program for analyzing the multiple samples (12, 12'),
**characterized in that** a variable field of vision of the detector (28) is automatically adjusted by means of the control device with the aid of an adjustable optical detection system that is arranged between the sample holder (13) and the detector (28) and comprises at least one refractive optical element (32) and/or one reflective optical element, wherein dimensional parameters of the samples (12, 12'), which are input by a user beforehand, are taken into consideration in the automatic adjustment in such a way that a desired field of vision for the sample (12) to be currently analyzed is respectively adjusted.

9. The method according to claim 8, wherein the adjustment of the optical detection system is carried out in dependence on a size and/or thickness of the sample (12) to be currently analyzed.

10. The method according to claim 8 or 9, wherein an adjustment of the field of vision in the same size is respectively realized for the multiple samples (12, 12') during the automatic adjustment.

## Revendications

1. Dispositif (10) pour l'analyse photo-thermique de plusieurs échantillons (12, 12'), avec
une chambre d'échantillons (36) pouvant être tempérée avec un porte-échantillons multiples (13) logé dedans pour la mise en place simultanée de plusieurs échantillons (12, 12') dans la chambre d'échantillons (36), des moyens étant prévus pour la sélection d'un échantillon respectif des plusieurs échantillons (12, 12') en tant qu'un échantillon (12) actuel à analyser,
une source d'excitation (14, 20, 22) pour la génération d'un faisceau d'excitation électromagnétique (18) dirigé sur une face d'excitation de l'échantillon (12) actuel à analyser,
un détecteur (28) pour détecter un rayonnement thermique (26) émis par une face de détection de l'échantillon (12) actuel à analyser, et
un dispositif de commande à commande par programme pour la sélection de l'échantillon (12) actuel à analyser et pour la réalisation d'une températion souhaitée de l'échantillon (12) actuel à analyser dans le cadre d'un programme de mesure pour l'analyse des plusieurs échantillons (12, 12'),
**caractérisé en ce que**, entre le porte-échantillons (13) et le détecteur (28), on prévoit une optique de détection réglable comprenant au moins un élément optique réfractif (32) et/ou un élément optique réflectif, laquelle est automatiquement réglable au moyen du dispositif de commande pour le réglage d'un champ de vision modifiable du détecteur (28) sur la surface d'échantillon, dans lequel le dispositif de commande est réalisé pour tenir compte de paramètres de dimension des échantillons (12, 12') pouvant être saisis à l'avance par l'utilisateur lors du réglage automatique du champ de vision du détecteur (28) dans le cadre du programme de mesure d'une manière telle, qu'un champ de vision respectivement souhaité pour l'échantillon (12) actuel à analyser est réglé.

2. Dispositif (10) selon la revendication 1, dans lequel on prévoit, en guise de face d'excitation, une première face plate (16) d'un échantillon (12) étendu en nappe, et en guise de face de détection, une deuxième face plate (24) de l'échantillon (12) tournant le dos à la première face plate.

3. Dispositif (10) selon la revendication 1 ou 2, dans lequel l'optique de détection comprend au moins un élément optique réfractif (32).

4. Dispositif (10) selon l'une des revendications précédentes, dans lequel l'optique de détection réglable est réalisée de telle sorte qu'un remplacement d'au moins un élément optique (32) de l'optique de détection par au moins un autre élément optique devienne ainsi possible.

5. Dispositif (10) selon l'une des revendications précédentes, dans lequel un entraînement linéaire est prévu grâce auquel une modification de la distance entre un élément optique (32) de l'optique de détection et l'échantillon (12) et/ou une modification de la distance entre un élément optique (32) de l'optique de détection et le détecteur (28) est possible.

6. Dispositif (10) selon l'une des revendications précédentes, dans lequel la chambre d'échantillons (36) pouvant être tempérée est réalisée de telle sorte que la températion des échantillons (12, 12') est possible à une température d'échantillon de plus de 300 °C, en particulier de plus de 400 °C.

7. Dispositif (10) selon l'une des revendications précédentes, dans lequel le dispositif de commande est conçu pour réaliser un réglage du champ visuel de grandeur respectivement identique pour les plusieurs échantillons (12, 12').

8. Procédé pour l'analyse photo-thermique de plusieurs échantillons (12, 12'), dans lequel
au moyen d'un porte-échantillons multiples (13) dans une chambre d'échantillons (36) pouvant être tempérée, plusieurs échantillons (12, 12') sont disposés simultanément dans la chambre d'échantillons (36), respectivement l'un d'entre eux étant sélectionné en tant qu'échantillon (12) actuel à analyser,
un faisceau d'excitation électromagnétique (18) étant dirigé sur une face d'excitation de l'échantillon (12) actuel à analyser,
un rayonnement thermique (26) émis par une face de détection de l'échantillon (12) actuel à analyser étant détecté au moyen d'un détecteur (28),
dans lequel, au moyen d'un dispositif de commande à commande par programme, l'échantillon (12) actuel à analyser est sélectionné et une températion souhaitée de cet échantillon (12) étant réalisée dans le cadre d'un programme de mesure pour l'analyse des plusieurs échantillons (12, 12'),
**caractérisé en ce que**, au moyen d'une optique de détection réglable prévue entre le porte-échantillons (13) et le détecteur (28), comprenant au moins un élément optique réfractif (32) et/ou un élément optique réflectif, un champ de vision modifiable du détecteur (28) sur la surface d'échantillon est réglé automatiquement au moyen du dispositif de commande, dans lequel, lors du réglage automatique, des paramètres de dimension des échantillons (12, 12') saisis à l'avance par un utilisateur sont pris en compte de telle sorte qu'un champ de vision respectivement souhaité pour l'échantillon (12) actuel à analyser soit réglé.

9. Procédé selon la revendication 8, dans lequel le réglage de l'optique de détection est réalisé en fonction d'une grandeur et/ou épaisseur de l'échantillon (12) actuel à analyser.

10. Procédé selon la revendication 8 ou 9, dans lequel, lors du réglage automatique pour les plusieurs échantillons (12, 12'), on réalise un réglage du champ de vision de grandeur respectivement égale.
